# EUROPEAN PATENT APPLICATION

(11) **EP 4 738 742 A1**
(43) Date of publication of application: **06.05.2026**
(21) Application number: 23942919.4
(22) Date of filing: 29.06.2023
(51) Int. Cl.: H04L 1/1812, H04W 76/28, H04L 1/1822, H04L 1/1829, H04L 1/1867

(54) **TIMER STARTING METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/104307
(87) International publication number: WO 2025/000411

(57) **Abstract**

The present disclosure provides a timer starting method, an apparatus, a device, and a storage medium. The method comprises: a physical downlink control channel (PDCCH) indicates a transmission block (TB) transmission of an uplink (UL) or a downlink (DL), and on the basis of at least one of a first configuration and a second configuration of a hybrid automatic repeat request (HARO), determines whether to stat a discontinuous reception inactivity timer (DRX inactivity timer). The present disclose can improve the stating accuracy of the DRX inactivity timer, improve the accuracy of blind retransmission monitoring, and improve the accuracy of TB retransmission.

## Description

### TECHNICAL FIELD

The disclosure relates to a field of communication technology, and in particular to methods and apparatuses for starting a timer, a device, and a storage medium.

### BACKGROUND

In a communication system, an Internet of Things (IOT) non-terrestrial network (NTN) is an important technology introduced in mobile communication technology, which provides wireless resources via satellites (or unmanned aerial vehicle (UAV)) instead of terrestrial base stations. In this communication system, for example, in a case where a hybrid automatic repeat request (HARQ) round-trip time (RTT) timer expires, and where data received in an HARQ process corresponding to the HARQ RTT timer is not successfully decoded, a discontinuous reception (DRX) inactivity timer may be started for the HARQ process.

### SUMMARY

The disclosure provides methods and apparatuses for starting a timer, a device, and a storage medium, to solve a problem of inaccurate start of a discontinuous reception (DRX) inactivity timer, which leads to low accuracy of transmission block (TB) retransmission.

According to a first aspect of the embodiments of the disclosure, there is provided a method for starting a timer, including: determining whether to start a DRX inactivity timer based on at least one of a first configuration or a second configuration of a hybrid automatic repeat request (HARQ), in which a physical downlink control channel (PDCCH) indicates uplink (UL) or downlink (DL) TB transmission.

According to a second aspect of the embodiments of the disclosure, there is provided a method for starting a timer, including: sending at least one of a first configuration or a second configuration of an HARQ to a terminal, in which a PDCCH indicates UL or DL TB transmission, and in which the at least one of the first configuration or the second configuration of the HARQ is used for determining whether to start a DRX inactivity timer.

According to a third aspect of the embodiments of the disclosure, there is provided a terminal, including a processing module configured to determine whether to start a DRX inactivity timer based on at least one of a first configuration or a second configuration of an HARQ, in which a PDCCH indicates UL or DL TB transmission.

According to a fourth aspect of the embodiments of the disclosure, there is provided a network device, including a transceiver module configured to send at least one of a first configuration or a second configuration of an HARQ to a terminal, in which a PDCCH indicates UL or DL TB transmission, and in which the at least one of the first configuration or the second configuration of the HARQ is used for determining whether to start a DRX inactivity timer.

According to a fifth aspect of the embodiments of the disclosure, there is provided a terminal, including: one or more processors, in which the one or more processors are configured to implement the method for starting a timer according to any one of the first aspect.

According to a sixth aspect of the embodiments of the disclosure, there is provided a network device, including: one or more processors, in which the one or more processors are configured to implement the method for starting a timer according to the second aspect.

According to a seventh aspect of the embodiments of the disclosure, there is provided a communication system, including a terminal and a network device, in which the terminal is configured to implement the method for starting a timer according to any one of the first aspect, and the network device is configured to implement the method for starting a timer according to the second aspect.

According to an eighth aspect of the embodiments of the disclosure, there is provided a storage medium having instructions stored thereon. When the instructions are running on a communication device, the communication device is caused to implement the method for starting a timer according to any one of the first aspect or the method for starting a timer according to the second aspect.

### BRIEF DESCRIPTION OF THE DRAWINGS

The above and/or other aspects and advantages of the embodiments of the disclosure will become apparent and more readily appreciated from the following descriptions in combination of the accompanying drawings.
FIG. 1 is a schematic diagram illustrating an architecture of a communication system according to embodiments of the disclosure.
FIG. 2 is a block diagram illustrating a system for maintaining wireless connection according to embodiments of the disclosure.
FIG. 3 is a block diagram illustrating an example of a transparent transmission mode according to embodiments of the disclosure.
FIG. 4 is a block diagram illustrating an example of a retransmission mode according to embodiments of the disclosure.
FIG. 5 is a schematic diagram illustrating an interaction of a method for starting a timer according to another embodiment of the disclosure.
FIG. 6A is a flowchart illustrating a method for starting a timer according to another embodiment of the disclosure.
FIG. 6B is a flowchart illustrating a method for starting a timer according to another embodiment of the disclosure.
FIG. 6C is a flowchart illustrating a method for starting a timer according to another embodiment of the disclosure.
FIG. 7A is a flowchart illustrating a method for starting a timer according to another embodiment of the disclosure.
FIG. 8A is a flowchart illustrating a method for starting a timer according to another embodiment of the disclosure.
FIG. 9A is a block diagram illustrating a terminal according to another embodiment of the disclosure.
FIG. 9B is a block diagram illustrating an access network device according to an embodiment of the disclosure.
FIG. 10A is a block diagram illustrating a communication device according to an embodiment of the disclosure.
FIG. 10B is a block diagram illustrating a chip according to an embodiment of the disclosure.

### DETAILED DESCRIPTION

The disclosure provides methods and apparatuses for starting a timer, a device, and a storage medium, to solve a problem of inaccurate start of a discontinuous reception (DRX) inactivity timer, which leads to low accuracy of transmission block (TB) retransmission.

According to a first aspect of the embodiments of the disclosure, there is provided a method for starting a timer, including: determining whether to start a DRX inactivity timer based on at least one of a first configuration or a second configuration of a hybrid automatic repeat request (HARQ), where a physical downlink control channel (PDCCH) indicates uplink (UL) or downlink (DL) TB transmission.

In the above embodiments, it may be determined whether to start the DRX inactivity timer based on the at least one of the first configuration and the second configuration, which may reduce a situation where the DRX inactivity timer is started inaccurately after a last HARQ RTT timer associated with at least one HARQ process corresponding to all TBs expires, thereby improving accuracy of starting the DRX inactivity timer, improving accuracy of blind retransmission monitoring, and improving accuracy of TB retransmission.

In combination with some embodiments of the first aspect, in some embodiments, the first configuration of the HARQ is a downlink control information (DCI)-based HARQ mode configuration or a DCI-based HARQ feedback configuration, and the second configuration of the HARQ is a radio resource control (RRC)-based HARQ mode configuration or an RRC-based HARQ feedback configuration.

In combination with some embodiments of the first aspect, in some embodiments, determining whether to start the DRX inactivity timer based on the at least one of the first configuration or the second configuration of the HARQ includes: starting or not starting the DRX inactivity timer in a case where the first configuration or the second configuration satisfies one or more of following situations: HARQ processes corresponding to all TBs being configured with HARQ feedback disabled or being configured with an HARQ mode B; only some of HARQ processes corresponding to all TBs being configured with HARQ feedback disabled or being configured with an HARQ mode B; or HARQ processes corresponding to all TBs including an HARQ process that is configured with HARQ feedback disabled or configured with an HARQ mode B, where the PDCCH indicates UL or DL multi-TB transmission.

In the above embodiments, during the UL or DL multi-TB transmission, the DRX inactivity timer may be started or not started for different configuration situations of the first configuration and the second configuration, which may improve accuracy of starting the DRX inactivity timer and improve accuracy of the UL or DL multi-TB transmission.

In combination with some embodiments of the first aspect, in some embodiments, after starting the DRX inactivity timer, the method further includes: not starting the DRX inactivity timer after an HARQ round-trip time (RTT) timer or a UL HARQ RTT timer of HARQ processes corresponding to the UL or DL multi-TB transmission expires.

In the above embodiments, the DRX inactivity timer may not be started after the HARQ RTT timer or the UL HARQ RTT timer of the HARQ processes corresponding to the UL or DL multi-TB transmission expires, which reduces resource consumption for starting the DRX inactivity timer and improves resource utilization.

In combination with some embodiments of the first aspect, in some embodiments, the method further includes: starting the DRX inactivity timer after a last HARQ RTT timer or a last UL HARQ RTT timer of HARQ processes corresponding to the UL or DL multi-TB transmission expires.

In the above embodiments, the DRX inactivity timer is started after the last HARQ RTT timer or the last UL HARQ RTT timer of the HARQ processes corresponding to the UL or DL multi-TB transmission expires, which may improve accuracy of starting the DRX inactivity timer and improve accuracy of the UL or DL multi-TB transmission.

In combination with some embodiments of the first aspect, in some embodiments, the method further includes: not starting the DRX inactivity timer, where the PDCCH indicates the UL or DL multi-TB transmission, and where HARQ processes corresponding to all TBs are configured with HARQ feedback enabled or configured with an HARQ mode A.

In the above embodiments, the DRX inactivity timer may not be started, where the PDCCH indicates the UL or DL multi-TB transmission, and where HARQ processes corresponding to all TBs are configured with HARQ feedback enabled or configured with the HARQ mode A, which may improve accuracy of starting the DRX inactivity timer and improve accuracy of TB retransmission.

In combination with some embodiments of the first aspect, in some embodiments, the method further includes: starting or not starting the DRX inactivity timer, where the PDCCH indicates the UL or DL multi-TB transmission, and where there is an HARQ process, corresponding to a TB among multiple TBs, that is configured with HARQ feedback enabled or configured with an HARQ mode A.

In the above embodiments, the DRX inactivity timer is started or is not started in a case where the PDCCH indicates the UL or DL multi-TB transmission and where there is the HARQ process, corresponding to the TB among multiple TBs, that is configured with HARQ feedback enabled or configured with the HARQ mode A. Therefore, the DRX inactivity timer may be started or not started based on the configuration of the HARQ process, which may improve accuracy of starting the DRX inactivity timer and improve accuracy of TB retransmission.

In combination with some embodiments of the first aspect, in some embodiments, determining whether to start the DRX inactivity timer based on the first configuration and the second configuration of the HARQ includes: starting or not starting the DRX inactivity timer in a case where the first configuration and the second configuration satisfy one or more of following situations: the first configuration being HARQ feedback enabled, and HARQ processes corresponding to all TBs being configured via the second configuration with HARQ feedback disabled or being configured via the second configuration with an HARQ mode B; the first configuration being the HARQ feedback enabled, and only some of HARQ processes corresponding to all TBs being configured via the second configuration with HARQ feedback disabled or being configured via the second configuration with an HARQ mode B; and the first configuration being the HARQ feedback enabled, and there being an HARQ process, among HARQ processes corresponding to all TBs, that is configured via the second configuration with HARQ feedback disabled or configured via the second configuration with an HARQ mode B, in which the PDCCH indicates UL or DL multi-TB transmission.

In the above embodiments, in a case where the PDCCH indicates the UL or DL multi-TB transmission, the DRX inactivity timer may be started or not started for different configuration situations corresponding to the first configuration and the second configuration, which may improve accuracy of starting the DRX inactivity timer and improve accuracy of the UL or DL multi-TB transmission.

In combination with some embodiments of the first aspect, in some embodiments, after starting the DRX inactivity timer, the method further includes: not starting the DRX inactivity timer after an HARQ RTT timer or a UL HARQ RTT timer of HARQ processes corresponding to the UL or DL multi-TB transmission expires.

In the above embodiments, after the DRX inactivity timer is started, the DRX inactivity timer is not started after the HARQ RTT timer or the UL HARQ RTT timer of the HARQ processes corresponding to the UL or DL multi-TB transmission expires. Therefore, resource consumption of blind retransmission monitoring may be reduced, and resource utilization efficiency may be improved.

In combination with some embodiments of the first aspect, in some embodiments, the method further includes: starting the DRX inactivity timer after a last HARQ RTT timer or a last UL HARQ RTT timer of HARQ processes corresponding to the UL or DL multi-TB transmission expires.

In the above embodiments, the DRX inactivity timer is started after the last HARQ RTT timer or the last UL HARQ RTT timer of the HARQ processes corresponding to the UL or DL multi-TB transmission expires. Therefore, accuracy of starting the DRX inactivity timer may be improved, and accuracy of blind retransmission monitoring may be improved.

In combination with some embodiments of the first aspect, in some embodiments, determining whether to start the DRX inactivity timer based on the first configuration and the second configuration of the HARQ includes: starting the DRX inactivity timer, where the first configuration indicates HARQ feedback disabled or indicates an HARQ mode B.

In the above embodiments, the DRX inactivity timer is started in a case where the first configuration indicates HARQ feedback disabled or indicates the HARQ mode B. Therefore, the DRX inactivity timer may be started based on the first configuration, which may improve accuracy of starting the DRX inactivity timer.

In combination with some embodiments of the first aspect, in some embodiments, determining whether to start the DRX inactivity timer based on the first configuration and the second configuration of the HARQ includes: not starting the DRX inactivity timer, where the first configuration indicates an HARQ mode A.

In the above embodiments, the DRX inactivity timer is not started, where the first configuration indicates the HARQ mode A. Therefore, the DRX inactivity timer may be not started based on the first configuration, which may improve accuracy of starting the DRX inactivity timer.

In combination with some embodiments of the first aspect, in some embodiments, determining whether to start the DRX inactivity timer based on the first configuration and the second configuration of the HARQ includes: starting the DRX inactivity timer in a case where one of following occurs: the first configuration indicating HARQ feedback enabled for an HARQ process of DL transmission; an HARQ process being configured with HARQ feedback disabled via the second configuration; or the terminal being a narrow band Internet of Things (NB-IoT) terminal and being only configured with one HARQ process, in which the PDCCH indicates DL single-TB transmission.

In the above embodiments, the PDCCH indicates the DL single-TB transmission, and the DRX inactivity timer may be started for different configuration situations of the first configuration and the second configuration, which may improve accuracy of starting the DRX inactivity timer and improve accuracy of the DL single-TB transmission.

In combination with some embodiments of the first aspect, in some embodiments, the method further includes: for UL or DL multi-TB transmission, not starting the DRX inactivity timer when an HARQ RTT timer or a UL HARQ RTT timer of HARQ processes corresponding to multiple TBs expires, where the first configuration and the second configuration are not determined.

In the above embodiments, for the UL or DL multi-TB transmission, the DRX inactivity timer is not started, where the first configuration and the second configuration are not determined, and where the HARQ RTT timer or the UL HARQ RTT timer of the HARQ processes corresponding to multiple TBs expires. Therefore, resources used for starting the DRX inactivity timer may be reduced, and accuracy of starting the DRX inactivity timer may be improved.

According to a second aspect of the embodiments of the disclosure, there is provided a method for starting a timer, including: sending at least one of a first configuration or a second configuration of an HARQ to a terminal, where a PDCCH indicates UL or DL TB transmission, and where the at least one of the first configuration or the second configuration of the HARQ is used for determining whether to start a DRX inactivity timer.

In the above embodiments, a start mechanism of the DRX inactivity timer may be provided for the terminal, which may reduce a situation where the DRX inactivity timer is started inaccurately after a last HARQ RTT timer associated with at least one HARQ process corresponding to multiple TBs expires, improve accuracy of starting the DRX inactivity timer, and improve accuracy of TB retransmission.

According to a third aspect of the embodiments of the disclosure, there is provided a terminal, including: a processing module, configured to determine whether to start a DRX inactivity timer based on at least one of a first configuration or a second configuration of an HARQ, where a PDCCH indicates UL or DL TB transmission.

In the above embodiments, the terminal may determine whether to start the DRX inactivity timer based on the at least one of the first configuration or the second configuration of the HARQ, which may reduce a situation where the DRX inactivity timer is started inaccurately after a last HARQ RTT timer associated with at least one HARQ process corresponding to multiple TBs expires, improve accuracy of starting the DRX inactivity timer, and improve accuracy of TB retransmission.

According to a fourth aspect of the embodiments of the disclosure, there is provided a network device, including: a transceiver module, configured to send at least one of a first configuration or a second configuration of an HARQ to a terminal, where a PDCCH indicates UL or DL TB transmission, and where the at least one of the first configuration or the second configuration of the HARQ is used for determining whether to start a DRX inactivity timer.

In the above embodiments, the network device may provide a start mechanism of the DRX inactivity timer for the terminal, which may reduce a situation where the DRX inactivity timer is started inaccurately after a last HARQ RTT timer associated with at least one HARQ process corresponding to multiple TBs expires, improve accuracy of starting the DRX inactivity timer, and improve accuracy of TB retransmission.

According to a fifth aspect of the embodiments of the disclosure, there is provided a terminal, including: one or more processors, in which the one or more processors are configured to implement the method for starting a timer according to any one of the first aspect.

According to a sixth aspect of the embodiments of the disclosure, there is provided a network device, including: one or more processors, in which the one or more processors are configured to implement the method for starting a timer according to the second aspect.

According to a seventh aspect of the embodiments of the disclosure, there is provided a communication system, including a terminal and a network device, in which the terminal is configured to implement the method for starting a timer according to any one of the first aspect, and the network device is configured to implement the method for starting a timer according to the second aspect.

According to an eighth aspect of the embodiments of the disclosure, there is provided a storage medium having instructions stored thereon. When the instructions are running on a communication device, the communication device is caused to implement the method for starting a timer according to any one of the first aspect or the method for starting a timer according to the second aspect.

Embodiments of the disclosure provide a method for starting a timer. In some embodiments, terms such as "the method for starting a timer", "information processing method" and "communication method" may be used interchangeably, terms such as "the apparatus for starting a timer", "information processing apparatus", and "communication apparatus" may be used interchangeably, and terms such as "system for processing information" and "communication system" may be used interchangeably.

Embodiments of the disclosure are not exhaustive and only serve as illustrations of some embodiments, but not as specific limitations to the protection scope of the disclosure. Without conflict, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the disclosure are for a purpose of describing specific embodiments only and are not intended to limit the disclosure.

In embodiments of the disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); or selecting one of A or B for execution in some implementations (selectively performing A or B). Similar principle applies when there are more parts such as A, B, C, etc.

The terms such as "first" and "second" added in front of other words in the embodiments of the disclosure are used solely to distinguish different described objects and do not limit a position, a sequence, a priority, a quantity, or content of the described objects. For a statement regarding the described object, reference may be made to claims or descriptions in the context of the embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in a same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be a same apparatus or different apparatuses, and their types may be the same or different. Similarly, if the described object is "information", "first information" and "second information" may be same information or different information, and their content may be the same or different.

In some embodiments, "including A", "including A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus/device" may be interpreted as either a physical apparatus or a virtual apparatus. Names are not limited to those recorded in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, "network" may be interpreted as a device included in the network, such as access network device, core network device, etc.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, obtaining data, information, etc. shall comply with laws and regulations of a country where it is located.

In some embodiments, data, information, etc. may be obtained after agreed by a user.

In addition, each element, each row, or each column in tables of the embodiments of the disclosure may be implemented as an independent embodiment. Any combination of elements, rows, or columns may also be implemented as an independent embodiment.

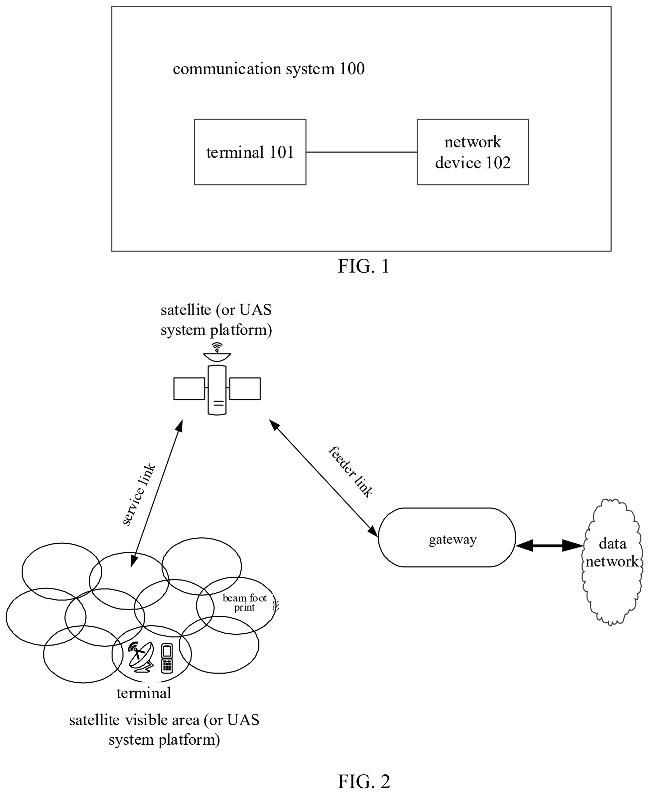

FIG. 1 is a schematic diagram illustrating an architecture of a communication system according to the embodiments of the disclosure. As illustrated in FIG. 1, the communication system 100 may include a terminal 101 and a network device 102.

In some embodiments, the terminal 101 includes, for example, at least one of a mobile phone, a wearable device, an Internet of Things device, or a car, a smart car, and a Pad, with a communication function, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited to these.

In some embodiments, the network device 102 may include, for example, at least one of the access network device or the core network device.

In some embodiments, the access network device 102 is, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited to these.

In some embodiments, the technical solution of the disclosure may be applied to an architecture of the Open RAN. In this case, an interface between access network devices or within the access network device in embodiments of the disclosure may become an internal interface of the Open RAN. Processes and information interaction may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited to these.

In some embodiments, the core network device may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

In some embodiments, the core network device may be a device including a first network element, a second network element, etc., or may be a plurality of devices or device groups, each of which includes all or part of the first network element, the second network element, etc. The network elements may be virtual or physical. The core network includes, for example, at least one of an EPC, a 5GCN, or an NGC.

In some embodiments, the first network element is, for example, a policy control function (PCF).

In some embodiments, the first network element is used to "support a unified policy framework to manage a network behavior, provide policy rules to a network entity for implementation, and access subscription information of unified data repository (UDR)". The name is not limited thereto.

In some embodiments, the second network element is, for example, unified data management (UDM).

In some embodiments, the second network element is used to "be responsible for user identification, subscription data, management of authentication data, and registration management of serving network elements of a user". The name is not limited thereto.

In some embodiments, a third network element is, for example, an authentication server function (AUSF).

In some embodiments, the third network element is used to "be used to receive a request from an access and mobility management function (AMF) to authenticate a terminal, request a key from UDM, and then forward the key delivered by the UDM to the AMF for authentication processing". The name is not limited thereto.

In some embodiments, the third network element may be independent of the core network device.

In some embodiments, the third network element may be part of the core network device.

**It** may be understood that the communication system in the embodiments of the disclosure is to clearly illustrate the technical solution of the embodiments of the disclosure, and does not constitute a limitation on the technical solution in the embodiments of the disclosure. Those skilled in the art may know, with evolution of the system architecture and emergence of new service scenarios, the technical solution in the embodiments of the disclosure is also applicable to similar technical problems.

The following embodiments of the disclosure may be applied to the communication system 100 illustrated in FIG. 1, or to some entities, which are not limited to this. Entities in FIG. 1 are illustrative. The communication system may include all or some of the entities in FIG. 1 or may include other entities not shown in FIG. 1. The entities may be in any number and in any form. The entities may be either physical or virtual. Connection relationships between the entities are illustrative. The entities may be unconnected or may be connected. They may be connected in any manner, for example, they may be directly connected or indirectly connected or may be connected via a wired or wireless way.

Embodiments of the disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

For example, in an embodiment of the disclosure, in a communication system, a non-terrestrial network (NTN) is an important technology in 5G, and may provide radio resources via a satellite (or an unmanned aerial vehicle) instead of a terrestrial base station. FIG. 2 is a block diagram of a system for maintaining wireless connection according to embodiments of the disclosure. As shown in FIG. 2, the system for maintaining wireless connection includes a user equipment (UE), a beam foot print, a service link, a satellite, an unmanned aircraft system (UAS) platform, a feeder link, a gateway, a data network, and a field of view of the satellite. According to different ways the satellite processes signals, it may be divided into a transparent transmission mode and a regeneration mode.

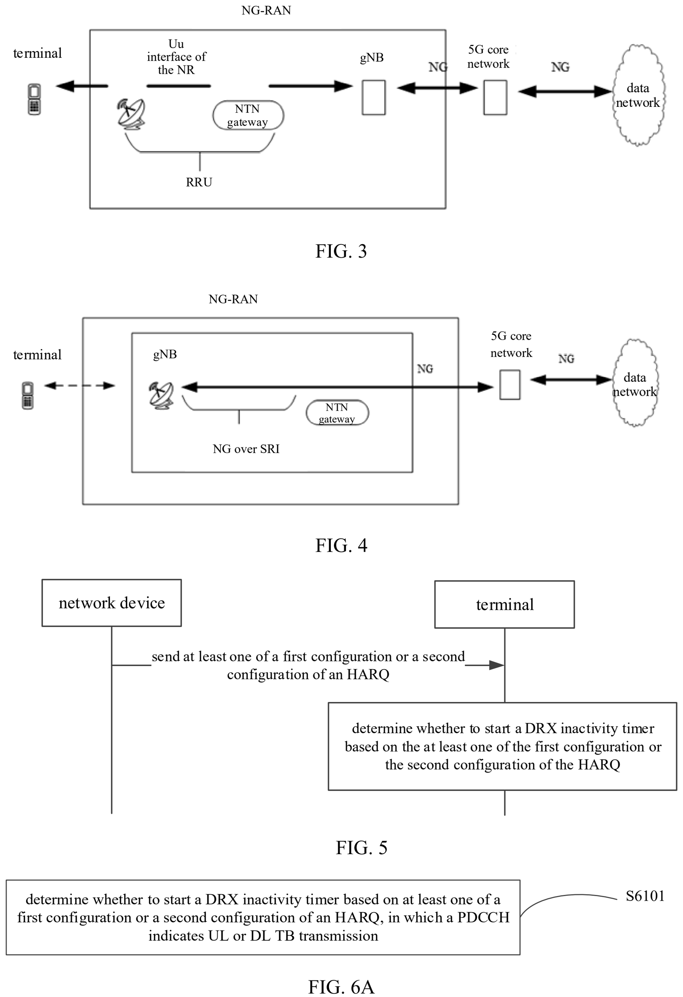

In an embodiment of the disclosure, FIG. 3 is a block diagram illustrating an example of a transparent transmission mode according to the embodiments of the disclosure. As illustrated in FIG. 3, an NTN ground station sends a signal of a gNB to a satellite, and the satellite converts the signal to a signal of the satellite frequency band and then deliver the signal to the UE with the satellite frequency band. Except for frequency conversion and signal amplification, the satellite does not demodulate a gNB signal, in which the satellite operates like a repeater. A 5G base station is called a gNB, which serves as a node that provides an NR user plane and a control plane protocol terminal to the UE, and it is connected to a 5GCN via an NG interface.

In an embodiment of the disclosure, FIG. 4 is a block diagram illustrating an example of a retransmission mode according to the embodiments of the disclosure. As illustrated in FIG. 4, after the NTN ground station sends a signal of the gNB to the satellite, the satellite demodulates and decodes the signal, encodes and modulates the demodulated and decoded signal (this process is called "regeneration") and sends the regenerated signal with the satellite frequency band.

In an embodiment of the disclosure, Table 1 shows satellite altitudes, orbits, and satellite coverage ranges of a typical NTN network according to embodiments of the disclosure.

**Table 1**

| Platforms | Altitude range | Orbit | Typical beam footprint size |
|---|---|---|---|
| Low-Earth Orbit (LEO) satellite | 300-1500km | Circular around the earth | 100-1000km |
| Medium-Earth Orbit (MEO) satellite | 7000-25000km | | 100-1000km |
| Geostationary Earth Orbit (GEO) satellite | 35786km | notional station keeping position fixed in terms of elevation/azimuth with respect to a given earth point | 200-3500km |
| UAS platform (including HAPS) | 8-50km (20 km for HAPS) | | 5-200km |
| High Elliptical Orbit (HEO) satellite | 400-50000km | Elliptical around the earth | 200-3500km |

According to some embodiments, in a scenario of a single TB, for an HARQ process configured with HARQ feedback disable via RRC, if the HARQ feedback enable is indicated via DCI, an NB-IoT terminal does not wait for an RTT+3ms before monitoring a narrowband PDCCH (NPDCCH) for a same HARQ process (or monitoring any NPDCCH for the case of single HARQ process configuration), thus having a certain impact on the DRX inactivity timer. A main impact is that even if the DCI indicates the HARQ feedback enable, its purpose is not to enable scheduling-based HARQ retransmission, but is only to facilitate the network device to adjust a scheduling strategy based on the HARQ feedback. Therefore, in this case, the DRX inactivity timer cannot be started. In other words, in this case, the terminal still needs to monitor blind retransmission scheduling, and the DRX inactivity timer needs to be started.

In addition, for a multi-TB scenario, a start mechanism of the DRX inactivity timer needs to be considered. For a multi-TB scheduling scenario in the NB-IoT, the DRX inactivity timer is not started upon receiving DL or UL new transmission scheduling, but is started only after a last HARQ RTT timer associated with multiple HARQ processes corresponding to the multiple TBs expires. However, for the multi-TB scenario, after an introduction of the HARQ feedback and the HARQ mode, HARQ feedback configurations or HARQ mode configurations of the HARQ processes corresponding to the multiple TBs may be different. Taking downlink as an example, an HARQ process corresponding to one TB in multi-TB scheduling may be configured with HARQ feedback disabled, while an HARQ process corresponding to another TB may be configured with HARQ feedback enabled. If it still waits until the last HARQ RTT timer expires, the HARQ process configured with HARQ feedback disabled has no way to monitor blind retransmission scheduling immediately after receiving downlink initial transmission.

The following describes in detail methods and apparatuses for starting a timer, a device, and a storage medium according to embodiments of the disclosure with reference to the accompanying drawings.

FIG. 5 is a schematic diagram illustrating an interaction of a method for starting a timer according to another embodiment of the disclosure. As illustrated in FIG. 5, the method may include the following.

**At** S5101, the network device 102 sends at least one of a first configuration or a second configuration of an HARQ to the terminal 101, where a PDCCH indicates UL or DL TB transmission.

At S5102, the terminal 101 determines whether to start a DRX inactivity timer based on the at least one of the first configuration or the second configuration of the HARQ.

In an embodiment of the disclosure, the terminal 101 may be, for example, a Narrow Band Internet of Things (NB-IoT) terminal.

For example, in an embodiment of the disclosure, data transmission on a physical downlink shared channel (PDSCH) or a physical uplink shared channel (PUSCH) may both be based on, for example, TB transmission.

**In** some embodiments, terms such as "send", "transmit", "report", "deliver", "transmit", "bidirectional transmission", "send and/or receive" may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

**In** some embodiments, terms such as "certain", "preseted", "preset", "set", "indicated", "a/an", "any", "first", etc. may be used interchangeably. "Certain A", "preseted A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited thereto.

**In** some embodiments, terms such as "downlink control information (DCI)", "downlink (DL) assignment", "DL DCI", "uplink (UL) grant", "UL DCI", etc. may be used interchangeably.

In some embodiments, terms such as "uplink", "physical uplink", etc. may be used interchangeably; terms such as "downlink", "physical downlink", etc. may be used interchangeably; and terms such as "sidelink", "sidelink communication", "direct link", "direct communication", etc. may be used interchangeably.

**In** some embodiments, terms such as "time point", "time", "time position", etc. may be used interchangeably; and terms such as "period", "time interval", "time window", "window", "time", etc. may be used interchangeably.

For example, in an embodiment of the disclosure, the first configuration of the HARQ is a DCI-based HARQ mode configuration or a DCI-based HARQ feedback configuration, and the second configuration of the HARQ is an RRC-based HARQ mode configuration or an RRC-based HARQ feedback configuration.

For example, in an embodiment of the disclosure, the first configuration may be, for example, a PDCCH-based HARQ mode or feedback configuration, in which the use of "first" is only for distinguishing the first configuration from the second configuration. The first configuration may be, for example, the PDCCH-based HARQ mode configuration, or the first configuration may also be, for example, the PDCCH-based HARQ feedback configuration.

For example, in an embodiment of the disclosure, the HARQ mode may include, for example, an HARQ mode A and an HARQ mode B. The HARQ mode A may be, for example, that scheduling of an HARQ process is allowed after one HARQ RTT has elapsed since last scheduling. The HARQ mode B may be, for example, that scheduling of an HARQ process is allowed before one HARQ RTT has elapsed since last scheduling.

For example, in an embodiment of the disclosure, the second configuration may be, for example, an RRC-based HARQ mode or feedback configuration. The second configuration may be, for example, the RRC-based HARQ mode configuration, or the second configuration may be, for example, the RRC-based HARQ feedback configuration.

At S5103, the terminal 101 starts or does not start the DRX inactivity timer in a case where one or more of following situations is satisfied by the first configuration or by the second configuration: all HARQ processes corresponding to all TBs being configured with HARQ feedback disabled or being configured with an HARQ mode B; only some of HARQ processes corresponding to all TBs being configured with HARQ feedback disabled or being configured with an HARQ mode B; or there being an HARQ process, among HARQ processes corresponding to all TBs, that is configured with HARQ feedback disabled or configured with an HARQ mode B, in which the PDCCH indicates UL or DL multi-TB transmission.

In an embodiment of the disclosure, the terminal 101 starts the DRX inactivity timer in a case where the one or more of following situations is satisfied by the first configuration or by the second configuration: HARQ processes corresponding to all TBs being configured with HARQ feedback disabled or being configured with the HARQ mode B; only some of HARQ processes corresponding to all TBs being configured with HARQ feedback disabled or being configured with the HARQ mode B; or there being the HARQ process, among the HARQ processes corresponding to all TBs, that is configured with HARQ feedback disabled or configured with the HARQ mode B, in which the PDCCH indicates the UL or DL multi-TB transmission.

The terminal 101 starts or does not start the DRX inactivity timer in a case where the one or more of following situations is satisfied by the first configuration or by the second configuration: HARQ processes corresponding to all TBs being configured with HARQ feedback disabled or being configured with the HARQ mode B; only some of HARQ processes corresponding to all TBs being configured with HARQ feedback disabled or being configured with the HARQ mode B; or there being the HARQ process, among the HARQ processes corresponding to all TBs, that is configured with HARQ feedback disabled or configured with the HARQ mode B, in which the PDCCH indicates the UL multi-TB transmission.

The terminal 101 starts or does not start the DRX inactivity timer in a case where the one or more of following situations is satisfied by the first configuration or by the second configuration: HARQ processes corresponding to all TBs being configured with HARQ feedback disabled or being configured with the HARQ mode B; only some of HARQ processes corresponding to all TBs being configured with HARQ feedback disabled or being configured with the HARQ mode B; or there being the HARQ process, among the HARQ processes corresponding to all TBs, that is configured with HARQ feedback disabled or configured with the HARQ mode B, in which the PDCCH indicates the DL multi-TB transmission, and.

At S5104, after starting the DRX inactivity timer, the terminal 101 does not start the DRX inactivity timer after an HARQ RTT timer or a UL HARQ RTT timer of HARQ processes corresponding to the UL or DL multi-TB transmission expires.

**At** S5105, the terminal 101 starts the DRX inactivity timer after a last HARQ RTT timer or a last UL HARQ RTT timer of the HARQ processes corresponding to the UL or DL multi-TB transmission expires.

**At** S5106, the terminal 101 does not start the DRX inactivity timer, where the PDCCH indicates the UL or DL multi-TB transmission, and where HARQ processes corresponding to all TBs are configured with HARQ feedback enabled or configured with an HARQ mode A.

For example, in an embodiment of the disclosure, for a scenario where an HARQ mode or HARQ feedback is configured only via RRC or DCI, the terminal 101 does not start the DRX inactivity timer, where the PDCCH indicates UL or DL multi-TB transmission, and where the HARQ processes corresponding to all TBs are configured with HARQ feedback enabled or configured with the HARQ mode A.

For example, in an embodiment of the disclosure, the terminal 101 does not start the DRX inactivity timer, where the PDCCH indicates the UL multi-TB transmission, and where the HARQ processes corresponding to all TBs are configured with the HARQ feedback enabled.

For example, in an embodiment of the disclosure, the terminal 101 does not start the DRX inactivity timer, where the PDCCH indicates the UL multi-TB transmission, and where the HARQ processes corresponding to all TBs are configured with the HARQ mode A.

For example, in an embodiment of the disclosure, the terminal 101 does not start the DRX inactivity timer, where the PDCCH indicates the DL multi-TB transmission, and where the HARQ processes corresponding to all TBs are configured with the HARQ feedback enabled.

For example, in an embodiment of the disclosure, the terminal 101 does not start the DRX inactivity timer , where the PDCCH indicates the DL multi-TB transmission, and where the HARQ processes corresponding to all TBs are configured with the HARQ mode A.

At S5107, the terminal 101 starts or does not start the DRX inactivity timer, where the PDCCH indicates the UL or DL multi-TB transmission, and where there is an HARQ process, corresponding to a TB among multiple TBs, that is configured with HARQ feedback enabled or configured with an HARQ mode A.

For example, in an embodiment of the disclosure, for a scenario where an HARQ mode or HARQ feedback is configured only via RRC or DCI, the terminal 101 starts or does not start the DRX inactivity timer, where the PDCCH indicates the UL or DL multi-TB transmission, and where there is the HARQ process, corresponding to the TB among multiple TBs, that is configured with HARQ feedback enabled or configured with the HARQ mode A.

For example, in an embodiment of the disclosure, the terminal 101 does not start the DRX inactivity timer, where the PDCCH indicates the UL or DL multi-TB transmission, and where there is the HARQ process, corresponding to the TB among the multiple TBs, that is configured with HARQ feedback enabled or configured with the HARQ mode A.

For example, in an embodiment of the disclosure, the terminal 101 starts or does not start the DRX inactivity timer, where the PDCCH indicates the UL multi-TB transmission, and where there is the HARQ process, corresponding to the TB of among the multiple TBs, that is configured with HARQ feedback enabled.

For example, in an embodiment of the disclosure, the terminal 101 starts or does not start the DRX inactivity timer, where the PDCCH indicates the UL multi-TB transmission, and where there is the HARQ process, corresponding to the TB among the multiple TBs, that is configured with the HARQ mode A.

For example, in an embodiment of the disclosure, the terminal 101 starts or does not start the DRX inactivity timer, where the PDCCH indicates the DL multi-TB transmission, and where there is the HARQ process, corresponding to the TB among the multiple TBs, that is configured with HARQ feedback enabled.

For example, in an embodiment of the disclosure, the terminal 101 starts or does not start the DRX inactivity timer, where the PDCCH indicates the DL multi-TB transmission, and where there is the HARQ process, corresponding to the TB among the multiple TBs, that is configured with the HARQ mode A.

At S5108, the terminal 101 starts or not start the DRX inactivity timer in a case where one or more of following situations is satisfied by the first configuration and by the second configuration: the first configuration being HARQ feedback enabled, and HARQ processes corresponding to all TBs being configured with HARQ feedback disabled via the second configuration or being configured with an HARQ mode B via the second configuration; the first configuration being HARQ feedback enabled, and only some of HARQ processes corresponding to all TBs being configured with HARQ feedback disabled via the second configuration or being configured with an HARQ mode B via the second configuration; or the first configuration being HARQ feedback enabled, and there being an HARQ process, among HARQ processes corresponding to all TBs, that is configured with HARQ feedback disabled via the second configuration or configured with an HARQ mode B via the second configuration, in which the PDCCH indicates UL or DL multi-TB transmission.

In an embodiment of the disclosure, the terminal 101 starts the DRX inactivity timer in a case where the one or more of following situations is satisfied by the first configuration and by the second configuration: the first configuration being HARQ feedback enabled, and HARQ processes corresponding to all TBs being configured with HARQ feedback disabled or being configured with the HARQ mode B via the second configuration; the first configuration being HARQ feedback enabled, and only some of HARQ processes corresponding to all TBs being configured with HARQ feedback disabled via the second configuration or being configured with the HARQ mode B via the second configuration; or the first configuration being HARQ feedback enabled, and there being the HARQ process, among the HARQ processes corresponding to all TBs, that is configured with HARQ feedback disabled via the second configuration or configured with the HARQ mode B via the second configuration, in which the PDCCH indicates the UL or DL multi-TB transmission.

At S5109, after starting the DRX inactivity timer, the terminal 101 does not start the DRX inactivity timer after an HARQ RTT timer or a UL HARQ RTT timer of HARQ processes corresponding to the UL or DL multi-TB transmission expires.

At S5110, the terminal 101 starts the DRX inactivity timer after a last HARQ RTT timer or a last UL HARQ RTT timer of HARQ processes corresponding to the UL or DL multi-TB transmission expires.

**At** S5111, the terminal 101 starts the DRX inactivity timer, where the first configuration indicates HARQ feedback disabled or indicates an HARQ mode B.

For example, in an embodiment of the disclosure, for a scenario where an HARQ mode or HARQ feedback is configured by both the RRC and the DCI, in a case where the PDCCH indicates the HARQ feedback disabled or indicates the HARQ mode B, the terminal 101 starts the DRX inactivity timer.

For example, in an embodiment of the disclosure, the technical solution of S5111 is applicable to a scenario where the PDCCH indicates the UL or DL multi-TB transmission, and to the DL or UL single-TB transmission.

At S5112, the terminal 101 does not start the DRX inactivity timer, where the first configuration indicates an HARQ mode A.

For example, in an embodiment of the disclosure, for a scenario where an HARQ mode or HARQ feedback is configured by the RRC and the DCI, the terminal 101 does not start the DRX inactivity timer, where the first configuration indicates the HARQ mode A.

For example, in an embodiment of the disclosure, the technical solution of S5111 is applicable to a scenario where the PDCCH indicates the UL or DL multi-TB transmission, and to the DL or UL single-TB transmission.

For example, in an embodiment of the disclosure, a start time of the DRX inactivity timer is that: for the single-TB transmission, the DRX inactivity timer is started after the HARQ RTT timer or the UL HARQ RTT timer of the HARQ process corresponding to the TB expires; and for the multi-TB transmission, the DRX inactivity timer is started after a last HARQ RTT timer or a last UL HARQ RTT timer of HARQ processes corresponding to the multiple TBs expires.

At S5113, the terminal 101 starts the DRX inactivity timer in a case where one of following occurs: the first configuration indicating HARQ feedback enabled for an HARQ process of DL transmission; an HARQ process being configured with HARQ feedback disabled via the second configuration; or the terminal being an NB-IoT terminal and being only configured with one HARQ process, in which the PDCCH indicates the DL single-TB transmission.

For example, in an embodiment of the disclosure, for a scenario where an HARQ mode or HARQ feedback is jointly configured by the RRC and the DCI, in a case where the PDCCH indicates the HARQ feedback enabled for the HARQ process of the DL transmission, or where the HARQ process is configured with the HARQ feedback disabled via the RRC, or where the terminal is the terminal 101 and is configured with only one HARQ process, the terminal 101 starts the DRX inactivity timer, in which the PDCCH indicates the DL single-TB transmission.

At S5114, for the UL or DL multi-TB transmission, the terminal 101 does not start the DRX inactivity timer, where the first configuration and the second configuration are not determined, and where an HARQ RTT timer or a UL HARQ RTT timer of HARQ processes corresponding to multiple TBs expires.

For example, in an embodiment of the disclosure, for the UL multi-TB transmission, the terminal 101 does not start the DRX inactivity timer, where the first configuration and the second configuration are not determined, and where the HARQ RTT timer or the UL HARQ RTT timer of the HARQ processes corresponding to the multiple TBs expires.

For example, in an embodiment of the disclosure, for the DL multi-TB transmission, the terminal 101 does not start the DRX inactivity timer, where the first configuration and the second configuration are not determined, and where the HARQ RTT timer or the UL HARQ RTT timer of the HARQ processes corresponding to the multiple TBs expires.

For example, in an embodiment of the disclosure, for a scenario where an HARQ mode or HARQ feedback is neither configured via the RRC nor configured via the DCI, for NB-IOT UL or DL multi-TB transmission, the terminal 101 does not start the DRX inactivity timer in a case where the HARQ RTT timer or the UL HARQ RTT timer of the HARQ processes corresponding to the multiple TBs expires.

The communication method according to embodiments of the disclosure may include at least one of S5101 to S5114. For example, S5101 may be implemented as an independent embodiment, S5103 may be implemented as an independent embodiment, S5101 to S5103 may be implemented as an independent embodiment, S5101 to S5104 may be implemented as an independent embodiment, but the disclosure is not limited thereto.

In some embodiments, S5104 and S5105 may be exchanged in order or executed simultaneously, and S5105 and S5106 may be exchanged in order or executed simultaneously.

In some embodiments, S5102 to S5114 are optional, and one or more of these steps may be omitted or replaced in different embodiments.

In some embodiments, reference may be made to other optional implementations described before or after the description corresponding to FIG. 5.

FIG. 6A is a flowchart illustrating a method for starting a timer according to another embodiment of the disclosure. As illustrated in FIG. 6A, embodiments of the disclosure relate to a method for starting a timer. The method includes the following.

At S6101, it is determined whether to start a DRX inactivity timer based on at least one of a first configuration or a second configuration of an HARQ, where a PDCCH indicates UL or DL TB transmission.

For optional implementations of S6101, reference may be made to the optional implementations of S5102 in FIG. 5 and to other related parts in the embodiments related to FIG. 5, which are not repeated here.

At S6102, the DRX inactivity timer is started or not started in a case where one or more of following situations is satisfied by the first configuration or by the second configuration: HARQ processes corresponding to all TBs being configured with HARQ feedback disabled or being configured with an HARQ mode B; only some of HARQ processes corresponding to all TBs being configured with HARQ feedback disabled or being configured with an HARQ mode B; or there being an HARQ process, among HARQ processes corresponding to all TBs, that is configured with HARQ feedback disabled or configured with an HARQ mode B, in which the PDCCH indicates UL or DL multi-TB transmission.

For optional implementations of S6102, reference may be made to the optional implementations of S5103 in FIG. 5 and to other related parts in the embodiments related to FIG. 5, which are not repeated here.

At S6103, after starting the DRX inactivity timer, the method further includes: not starting the DRX inactivity timer after an HARQ RTT timer or a UL HARQ RTT timer of HARQ processes corresponding to the UL or DL multi-TB transmission expires.

For optional implementations of S6103, reference may be made to the optional implementations of S5104 in FIG. 5 and to other related parts in the embodiments related to FIG. 5, which are not repeated here.

At S6104, the DRX inactivity timer is started after a last HARQ RTT timer or a last UL HARQ RTT timer of HARQ processes corresponding to the UL or DL multi-TB transmission expires.

For optional implementations of S6104, reference may be made to the optional implementations of S5105 in FIG. 5 and to other related parts in the embodiments related to FIG. 5, which are not repeated here.

At S6105, the DRX inactivity timer is not started, where the PDCCH indicates the UL or DL multi-TB transmission, and where HARQ processes corresponding to all TBs are configured with HARQ feedback enabled or configured with an HARQ mode A.

For optional implementations of S6105, reference may be made to the optional implementations of S5106 in FIG. 5 and to other related parts in the embodiments related to FIG. 5, which are not repeated here.

**At** S6106, the DRX inactivity timer is started or not started, where the PDCCH indicates the UL or DL multi-TB transmission, and where there is an HARQ process, corresponding to a TB among multiple TBs, that is configured with HARQ feedback enabled or configured with an HARQ mode A.

For optional implementations of S6106, reference may be made to the optional implementations of S5107 in FIG. 5 and to other related parts in the embodiments related to FIG. 5, which are not repeated here.

At S6107, the DRX inactivity timer is started or not started in a case where one or more of following situations is satisfied by the first configuration and by the second configuration: the first configuration being HARQ feedback enabled, and HARQ processes corresponding to all TBs being configured with HARQ feedback disabled via the second configuration or being configured with an HARQ mode B via the second configuration; the first configuration being the HARQ feedback enabled, and only some of HARQ processes corresponding to all TBs being configured with HARQ feedback disabled via the second configuration or being configured with an HARQ mode B via the second configuration; or the first configuration being the HARQ feedback enabled, and there being an HARQ process, among HARQ processes corresponding to all TBs, that is configured with HARQ feedback disabled via the second configuration or configured with an HARQ mode B via the second configuration, in which the PDCCH indicates UL or DL multi-TB transmission.

For optional implementations of S6107, reference may be made to the optional implementations of S5108 in FIG. 5 and to other related parts in the embodiments related to FIG. 5, which are not repeated here.

At S6108, the DRX inactivity timer is not started after an HARQ RTT timer or a UL HARQ RTT timer of HARQ processes corresponding to the UL or DL multi-TB transmission expires.

For optional implementations of S6108, reference may be made to the optional implementations of S5109 in FIG. 5 and to other related parts in the embodiments related to FIG. 5, which are not repeated here.

At S6109, the DRX inactivity timer is started after a last HARQ RTT timer or a last UL HARQ RTT timer of HARQ processes corresponding to the UL or DL multi-TB transmission expires.

For optional implementations of S6109, reference may be made to the optional implementations of S5110 in FIG. 5 and to other related parts in the embodiments related to FIG. 5, which are not repeated here.

At S6110, the DRX inactivity timer is started, where the first configuration indicates HARQ feedback disabled or indicates an HARQ mode B.

For optional implementations of S6110, reference may be made to the optional implementations of S5111 in FIG. 5 and to other related parts in the embodiments related to FIG. 5, which are not repeated here.

At S6111, the DRX inactivity timer is started, where the first configuration indicates HARQ feedback disabled or indicates an HARQ mode B.

For optional implementations of S6111, reference may be made to the optional implementations of S5112 in FIG. 5 and to other related parts in the embodiments related to FIG. 5, which are not repeated here.

At S6112, the DRX inactivity timer is started in a case where one of following occurs: the first configuration indicating HARQ feedback enabled for an HARQ process of DL transmission; an HARQ process being configured with HARQ feedback disabled via the second configuration; or the terminal being an NB-IoT terminal and being only configured with one HARQ process, in which the PDCCH indicates DL single-TB transmission.

For optional implementations of S6112, reference may be made to the optional implementations of S5113 in FIG. 5 and to other related parts in the embodiments related to FIG. 5, which are not repeated here.

At S6113, for UL or DL multi-TB transmission, the DRX inactivity timer is not started in a case where an HARQ RTT timer or a UL HARQ RTT timer of HARQ processes corresponding to multiple TBs expires, in which the first configuration and the second configuration are not determined.

For optional implementations of S6113, reference may be made to the optional implementations of S5114 in FIG. 5 and to other related parts in the embodiments related to FIG. 5, which are not repeated here.

The communication method according to embodiments of the disclosure may include at least one of S6101 to S6113. For example, S6101 may be implemented as an independent embodiment, S6103 may be implemented as an independent embodiment, S6101 to S6102 may be implemented as an independent embodiment, and S6101 to S6103 may be implemented as an independent embodiment, but the disclosure is not limited thereto.

In some embodiments, S6103 and S6104 may be exchanged in sequence or executed simultaneously, and S6104 and S6105 may be exchanged in sequence or executed simultaneously.

In some embodiments, S6102 to S6114 are optional, and in different embodiments, one or more of these steps may be omitted or replaced.

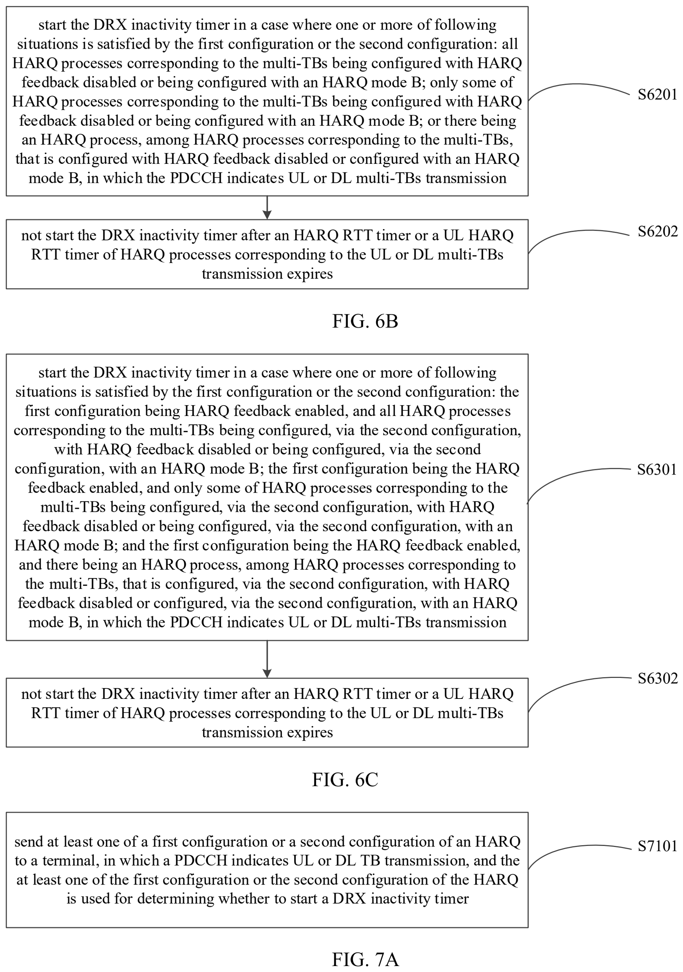

In some embodiments, reference may be made to other optional implementations recorded before or after the description corresponding to FIG. 6.

FIG. 6B is a flowchart illustrating a method for starting a timer according to the embodiments of the disclosure. As illustrated in FIG. 6B, embodiments of the disclosure relate to a method for starting a timer. The method includes the following.

At S6201, the DRX inactivity timer is started in a case where one or more of following situations is satisfied by the first configuration or by the second configuration: HARQ processes corresponding to all TBs being configured with HARQ feedback disabled or being configured with an HARQ mode B; only some of HARQ processes corresponding to all TBs being configured with HARQ feedback disabled or being configured with an HARQ mode B; or there being an HARQ process, among HARQ processes corresponding to all TBs, that is configured with HARQ feedback disabled or configured with an HARQ mode B, in which the PDCCH indicates UL or DL multi-TB transmission.

At S6202, the DRX inactivity timer is not started after an HARQ RTT timer or a UL HARQ RTT timer of HARQ processes corresponding to the UL or DL multi-TB transmission expires.

For optional implementations of S6201 and S6202, reference may be made to the optional implementations of S5103 and S5104 in FIG. 5, to the optional implementations of S6102 and S6103 in FIG. 6A, and to other related parts in the embodiments related to FIG. 5 and FIG. 6A, which are not repeated here.

The communication method according to embodiments of the disclosure may include at least one of S6201 to S6202. For example, S6201 may be implemented as an independent embodiment, S6202 may be implemented as an independent embodiment, and S6201 and S6202 may be implemented as an independent embodiment, but the disclosure is not limited thereto.

In some embodiments, S6202 is optional, and in different embodiments, one or more of these steps may be omitted or replaced.

In embodiments of the disclosure, S6201 may be combined with S5104 in FIG. 5, and S6201 may be combined with S6105 in FIG. 6A.

FIG. 6C is a flowchart illustrating a method for starting a timer according to another embodiment of the disclosure. As illustrated in FIG. 6C, embodiments of the disclosure relate to a method for starting a timer. The method includes the following.

At S6301, the DRX inactivity timer is started in a case where one or more of following situations is satisfied by the first configuration and by the second configuration: the first configuration being HARQ feedback enabled, and HARQ processes corresponding to all TBs being configured with HARQ feedback disabled via the second configuration or being configured with an HARQ mode B via the second configuration; the first configuration being the HARQ feedback enabled, and only some of HARQ processes corresponding to all TBs being configured with HARQ feedback disabled via the second configuration or being configured with an HARQ mode B via the second configuration; or the first configuration being the HARQ feedback enabled, and there being an HARQ process, among HARQ processes corresponding to all TBs, that is configured with HARQ feedback disabled via the second configuration or configured with an HARQ mode B via the second configuration, in which the PDCCH indicates UL or DL multi-TB transmission.

At S6302, the DRX inactivity timer is not started after an HARQ RTT timer or a UL HARQ RTT timer of HARQ processes corresponding to the UL or DL multi-TB transmission expires.

For optional implementations of S6301 and S6302, reference may be made to the optional implementations of S5108 and S5109 in FIG. 5, to the optional implementations of S6107 and S6108 in FIG. 6A, and to other related parts in the embodiments related to FIG. 5 and FIG. 6A, which are not repeated here.

The communication method according to embodiments of the disclosure may include at least one of S6301 to S6302. For example, S6301 may be implemented as an independent embodiment, S6302 may be implemented as an independent embodiment, and S6301 and S6302 may be implemented as an independent embodiment, but the disclosure is not limited thereto.

In some embodiments, S6302 is optional, and in different embodiments, one or more of these steps may be omitted or replaced.

In embodiments of the disclosure, S6301 may be combined with S5109 in FIG. 5, and S6301 may be combined with S6108 in FIG. 6A.

FIG. 7A is a flowchart illustrating a method for starting a timer according to embodiments of the disclosure. As illustrated in FIG. 7A, embodiments of the disclosure relates to a method for starting a timer. The method includes the following.

At S7101, at least one of a first configuration or a second configuration of an HARQ is sent to a terminal, where a PDCCH indicates UL or DL TB transmission, and where the at least one of the first configuration or the second configuration of the HARQ is used for determining whether to start a DRX inactivity timer.

In some embodiments, the network device 102 sends at least one of the first configuration or the second configuration to the terminal 101, but the disclosure is not limited thereto, and the network device 102 may also send at least one of the first configuration and the second configuration to other entities.

For example, in an embodiment of the disclosure, at least one of the first configuration or the second configuration is used for the terminal 101 to determine whether to start the DRX inactivity timer. For optional implementations, reference may be made to the optional implementations of S5101 in FIG. 5, and to other related parts in the embodiments related to FIG. 5, which are not repeated here.

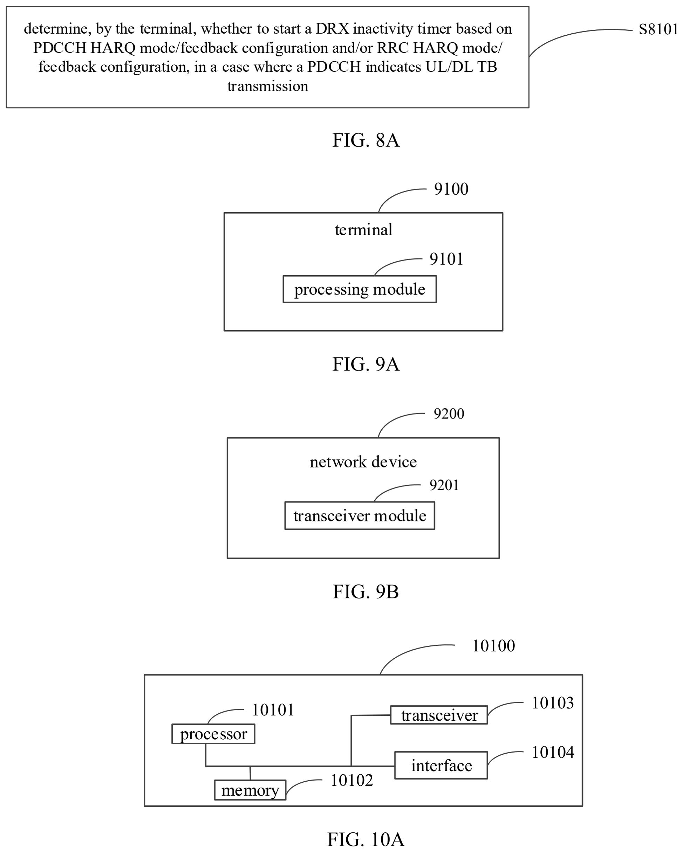

FIG. 8A is a flowchart illustrating a method for starting a timer according to embodiments of the disclosure. As illustrated in FIG. 8A, embodiments of the disclosure relate to a method for starting a timer. The method includes the following.

At S8101, in a case where a PDCCH indicates UL/DL TB transmission, the terminal may determine whether to start a DRX inactivity timer based on PDCCH HARQ mode/feedback configuration, and/or HARQ mode/feedback configuration of the RRC.

At S8102, for a scenario where HARQ mode/feedback is configured only via RRC or DCI, in a case where the PDCCH indicates UL or DL multi-TB transmission, an NB-IoT terminal may start or not start the DRX inactivity timer in a case where one or more of following situations is satisfied: HARQ processes corresponding to all TBs being configured with HARQ feedback disabled or being configured with an HARQ mode B; only some of HARQ processes corresponding to all TBs being configured with HARQ feedback disabled or being configured with an HARQ mode B; or there being an HARQ process, among HARQ processes corresponding to all TBs, that is configured with HARQ feedback disabled or configured with an HARQ mode B.

For example, in an embodiment of the disclosure, it is recommended to start the DRX inactivity timer for the above cases.

At S8103, the terminal may not start the DRX inactivity timer after an HARQ RTT timer or an HARQ RTT timer of HARQ processes corresponding to the UL or DL multi-TB transmission expires.

For example, in an embodiment of the disclosure, if the DRX inactivity timer is started at S8102.

At S8104, the terminal may start the DRX inactivity timer after a last HARQ RTT timer or a last UL HARQ RTT timer of HARQ processes corresponding to the UL or DL multi-TB transmission expires.

At S8105, for a scenario where the HARQ mode/feedback is configured only via the RRC or the DCI, in a case where the PDCCH indicates UL or DL multi-TB transmission, and where HARQ processes corresponding to all TBs are configured with HARQ feedback enabled or configured with an HARQ mode A, the NB-IOT terminal may not start the DRX inactivity timer.

At S8106, for a scenario where the HARQ mode/feedback is configured only via the RRC or the DCI, in a case where the PDCCH indicates UL or DL multi-TB transmission, and where there is an HARQ process, corresponding to a TB among multiple TBs, that is configured with HARQ feedback enabled or configured with an HARQ mode A, the NB-IOT terminal may start or not start the DRX inactivity timer.

For example, in an embodiment of the disclosure, it is recommended not to start the DRX inactivity timer.

At S8107, for a scenario where the HARQ mode/feedback is configured via both the RRC and the DCI, in a case where the PDCCH indicates HARQ feedback enabled, and where the PDCCH indicates UL or DL multi-TB transmission, the NB-IOT terminal may start or not start the DRX inactivity timer in a case where one or more of following situations is satisfied: HARQ processes corresponding to all TBs being configured with HARQ feedback disabled via the RRC or being configured with an HARQ mode B via the RRC; only some of HARQ processes corresponding to all TBs being configured with HARQ feedback disabled via the RRC or being configured with an HARQ mode B via the RRC; or there being an HARQ process, among HARQ processes corresponding to all TBs, that is configured with HARQ feedback disabled via the RRC or configured with an HARQ mode B via the RRC.

For example, in an embodiment of the disclosure, it is recommended to start the DRX inactivity timer for the above cases, and it is recommended not to start the DRX inactivity timer for other cases.

At S8108, the terminal may not start the DRX inactivity timer after the HARQ RTT timer or the UL HARQ RTT timer of the HARQ processes corresponding to the UL or DL multi-TB transmission expires.

For example, in an embodiment of the disclosure, if the DRX inactivity timer is started in S8107.

At S8109, the terminal may start the DRX inactivity timer after the last HARQ RTT timer or the last UL HARQ RTT timer of the HARQ processes corresponding to the UL or DL multi-TB transmission expires.

At S8110, for a scenario where the HARQ mode/feedback is jointly configured by both the RRC and the DCI, in a case where the PDCCH indicates HARQ feedback disabled or indicates an HARQ mode B, the NB-IOT terminal may start the DRX inactivity timer.

For example, in an embodiment of the disclosure, the technical solution of S8110 is applicable to the PDCCH indicating the UL or DL multi-TB transmission, and to the DL/UL single-TB transmission.

At S8111, for a scenario where the HARQ mode/feedback is jointly configured by both the RRC and the DCI, in a case where the PDCCH indicates an HARQ mode A, the NB-IOT terminal may not start the DRX inactivity timer.

For example, in an embodiment of the disclosure, the technical solution of S8111 is applicable to the PDCCH indicating the UL or DL multi-TB transmission, and to the DL/UL single-TB transmission.

For example, in an embodiment of the disclosure, a start time of the DRX inactivity timer is that: for single TB transmission, the DRX inactivity timer is started after the HARQ RTT timer or the UL HARQ RTT timer of HARQ processes corresponding to the TB expires; and for multi-TB transmission, the DRX inactivity timer is started after a last HARQ RTT timer or a last UL HARQ RTT timer of HARQ processes corresponding to the multiple TBs expires.

At S8112, for a scenario where the HARQ mode/feedback is jointly configured by both the RRC and the DCI, when the PDCCH indicates DL single-TB transmission, in a case where the PDCCH indicates HARQ feedback enabled for an HARQ process of DL transmission, where the HARQ process is configured with HARQ feedback disabled via the RRC, or where the terminal is an NB-IOT terminal and is only configured with one HARQ process, the terminal may start the DRX inactivity timer.

At S8113, for a scenario where the HARQ mode/feedback is neither configured via the RRC nor configured the DCI, for NB-IOT DL/UL multi-TB transmission, in a case where the HARQ RTT timer or the UL HARQ RTT timer of the HARQ processes corresponding to the multiple TBs expires, the terminal may not start the DRX inactivity timer.

The communication method according to embodiments of the disclosure may include at least one of S8101 to S8113. For example, S8101 may be implemented as an independent embodiment, S8102 may be implemented as an independent embodiment, and S8102 and S8103 may be implemented as an independent embodiment, but the disclosure is not limited thereto.

In some embodiments, S8103 and S8104 may be exchanged in sequence or executed simultaneously, and S8104 and S8105 may be exchanged in sequence or executed simultaneously.

In some embodiments, S8102 to S8113 are optional, and in different embodiments, one or more of these steps may be omitted or replaced.

In some embodiments, S8103 to S8113 are optional, and in different embodiments, one or more of these steps may be omitted or replaced.

In embodiments of the disclosure, some or all steps and their optional implementations may be arbitrarily combined with some or all steps in other embodiments, and may also be arbitrarily combined with optional implementations of other embodiments.

Embodiments of the disclosure also provide apparatuses for implementing any one of above methods. For example, an apparatus is provided, including units or modules for implementing steps executed by a terminal in any one of above methods. As another example, another apparatus is provided, including units or modules for implementing steps executed by a network device (for example, an access network device, a core network function node, a core network device, etc.) in any one of above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in a form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In embodiments of the disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 9A is a block diagram illustrating a terminal according to embodiments of the disclosure. As illustrated in FIG. 9A, the terminal 9100 may include a processing module 9101. In some embodiments, the processing module 9101 is configured to determine whether to start a DRX inactivity timer based on at least one of a first configuration or a second configuration of an HARQ, where a PDCCH indicates UL or DL TB transmission. For example, the processing module 9101 is configured to perform at least one of communication steps such as sending and/or receiving executed by the terminal 101 in any one of the above methods (for example, but is not limited to, S5102, S5103, S5104, S5105, S5106, S5107, S5108, S5109, S5110, S5111, S5112, S5113, and S5114), which are not repeated here.

FIG. 9B is a block diagram illustrating an access network device according to embodiments of the disclosure. As illustrated in FIG. 9B, a network device 9200 may include: a transceiver module 9201 configured to send at least one of a first configuration or a second configuration of an HARQ to a terminal, where a PDCCH indicates UL or DL TB transmission, and where the at least one of the first configuration or the second configuration of the HARQ is used for determining whether to start a DRX inactivity timer.

In some embodiments, the transceiver module may include a sending module and/or a receiving module, and the sending module and the receiving module may be separated or integrated together. For example, terms such as "transceiver module" and "transceiver" may be used interchangeably.

In some embodiments, the processing module may be one module or may include a plurality of sub-modules. For example, the plurality of sub-modules respectively perform all or some of steps required to be executed by the processing module. For example, terms such as "processing module" and "processor" may be used interchangeably.

FIG. 10A is a block diagram illustrating a communication device 10100 according to an embodiment of the disclosure. The communication device 10100 may be a network device (for example, an access network device, a core network device, etc.), or may be a terminal (for example, a user equipment, etc.), or may be a chip, a chip system, or a processor that supports the network device to implement any one of the above methods, or a chip, a chip system, or a processor that supports the terminal to implement any one of the above methods. The communication device 10100 may be configured to implement the method described in the above method embodiments, and specific details may be referred to the description in the above method embodiments.

As illustrated in FIG. 10A, the communication device 10100 includes one or more processors 10101. The processor 10101 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data. The communication device 10100 is configured to execute any one of the above methods.

In some embodiments, the communication device 10100 further includes one or more memories 10102 for storing instructions. For example, all or some of the memories 10102 may also be located outside the communication device 10100.

In some embodiments, the communication device 10100 further includes one or more transceivers 10103. When the communication device 10100 includes one or more transceivers 10103, the transceiver 10103 performs at least one of communication steps such as sending and/or receiving in the above methods (for example, but is not limited to, S5102, S5103, S5104, S5105, S5106, S5107, S5108, S5109, S5110, S5111, S5112, S5113, or S5114), and the processor 10101 performs at least one of other steps (for example, buts is not limited to, S5102, S5103, S5104, S5105, S5106, S5107, S5108, S5109, S5110, S5111, S5112, S5113, or S5114).

In some embodiments, the transceiver may include a receiver and/or a transmitter, which may be separate or integrated. For example, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 10100 may include one or more interface circuits 10104. For example, the interface circuit 10104 is connected to the memory 10102, and the interface circuit 10104 may be used to receive signals from the memory 10102 or other devices, and may be used to send signals to the memory 10102 or other devices. For example, the interface circuit 10104 may read instructions stored in the memory 10102 and send the instructions to the processor 10101.

The communication device 10100 in the description of the above embodiments may be a network device or a terminal, but the scope of the communication device 10100 described in the disclosure is not limited thereto, and the structure of the communication device 10100 may not be limited by FIG. 10A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

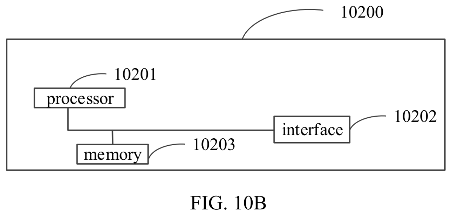

FIG. 10B is a block diagram illustrating a chip according to embodiments of the disclosure. For the case where the communication device 10100 may be a chip or a chip system, reference may be made to the block diagram of the structure of the chip in FIG. 10B, but the disclosure is not limited thereto.

The chip 10200 includes one or more processors 10201, and the chip 10200 is configured to implement any one of above methods.

In some embodiments, the chip 10200 further includes one or more interface circuits 10202. For example, the interface circuit 10202 is connected to a memory 10203, the interface circuit 10202 may be used to receive signals from the memory 10203 or other devices, and the interface circuit 10202 may be used to send signals to the memory 10203 or other devices. For example, the interface circuit 10202 may read instructions stored in the memory 10203 and send the instructions to the processor 10201.

In some embodiments, the interface circuit 10202 performs at least one of communication steps such as sending and/or receiving in the above methods (for example, but is not limited to, S5102, S5103, S5104, S5105, S5106, S5107, S5108, S5109, S5110, S5111, S5112, S5113, or S5114), and the processor 10201 performs at least one of other steps (for example, but is not limited to, S5102, S5103, S5104, S5105, S5106, S5107, S5108, S5109, S5110, S5111, S5112, S5113, or S5114).

In some embodiments, terms such as interface circuit, interface, transceiver pin, transceiver, etc. may be used interchangeably.

In some embodiments, the chip 10200 further includes one or more memories 10203 for storing instructions. For example, all or some of the memories 10203 may be located outside the chip 10200.

The disclosure also provides a storage medium for storing instructions. When the instructions are running on the communication device 10100, the communication device 10100 is caused to implement any one of the above methods. For example, the storage medium is an electronic storage medium. For example, the storage medium is a computer-readable storage medium, but it is not limited thereto, and it may also be a storage medium readable by other devices. For example, the storage medium may be a non-transitory storage medium, but it is not limited thereto, and it may also be a transitory storage medium.

The disclosure also provides a program product. When the program product is executed by the communication device 10100, the communication device 10100 is caused to implement any one of the above methods. For example, the program product is a computer program product.

The disclosure also provides a computer program. When the computer program is executed on a computer, the computer is caused to implement any one of above methods.

## Claims

1. A method for starting a timer, comprising:
determining whether to start a discontinuous reception (DRX) inactivity timer based on at least one of a first configuration or a second configuration of a hybrid automatic repeat request (HARQ), wherein a physical downlink control channel (PDCCH) indicates uplink (UL) or downlink (DL) transmission block (TB) transmission.

2. The method of claim 1, wherein the first configuration of the HARQ is a downlink control information (DCI)-based HARQ mode configuration or a DCI-based HARQ feedback configuration, and the second configuration of the HARQ is a radio resource control (RRC)-based HARQ mode configuration or an RRC-based HARQ feedback configuration.

3. The method of claim 1 or 2, wherein determining whether to start the DRX inactivity timer based on the at least one of the first configuration or the second configuration of the HARQ comprises:
starting or not starting the DRX inactivity timer in a case where one or more of following situations is satisfied by the first configuration or by the second configuration:
HARQ processes corresponding to all TBs being configured with HARQ feedback disabled or being configured with an HARQ mode B;
only some of HARQ processes corresponding to all TBs being configured with HARQ feedback disabled or being configured with an HARQ mode B; or
there being an HARQ process, among HARQ processes corresponding to all TBs, that is configured with HARQ feedback disabled or configured with an HARQ mode B;
wherein the PDCCH indicates UL or DL multi-TB transmission.

4. The method of claim 3, after starting the DRX inactivity timer, further comprising:
not starting the DRX inactivity timer after an HARQ round-trip time (RTT) timer or a UL HARQ RTT timer of HARQ processes corresponding to the UL or DL multi-TB transmission expires.

5. The method of claim 3, further comprising:
starting the DRX inactivity timer after a last HARQ round-trip time (RTT) timer or a last UL HARQ RTT timer of HARQ processes corresponding to the UL or DL multi-TB transmission expires.

6. The method of claim 3, further comprising:
not starting the DRX inactivity timer, wherein the PDCCH indicates the UL or DL multi-TB transmission, and HARQ processes corresponding to all TBs are configured with HARQ feedback enabled or configured with an HARQ mode A.

7. The method of claim 3, further comprising:
starting or not starting the DRX inactivity timer, wherein the PDCCH indicates the UL or DL multi-TB transmission, and there is an HARQ process, corresponding to a TB among multiple TBs, that is configured with HARQ feedback enabled or configured with an HARQ mode A.

8. The method of claim 1 or 2, wherein determining whether to start the DRX inactivity timer based on the at least one of the first configuration or the second configuration of the HARQ comprises:
starting or not starting the DRX inactivity timer in a case where one or more of following situations is satisfied by the first configuration and by the second configuration:
the first configuration being HARQ feedback enabled, and HARQ processes corresponding to all TBs being configured with HARQ feedback disabled via the second configuration or being configured with an HARQ mode B via the second configuration;
the first configuration being the HARQ feedback enabled, and only some of HARQ processes corresponding to all TBs being configured with HARQ feedback disabled via the second configuration or being configured with an HARQ mode B via the second configuration; and
the first configuration being the HARQ feedback enabled, and there being an HARQ process, among HARQ processes corresponding to all TBs, that is configured with HARQ feedback disabled via the second configuration or configured with an HARQ mode B via the second configuration;
wherein the PDCCH indicates UL or DL multi-TB transmission.

9. The method of claim 8, after starting the DRX inactivity timer, further comprising:
not starting the DRX inactivity timer after an HARQ round-trip time (RTT) timer or a UL HARQ RTT timer of HARQ processes corresponding to the UL or DL multi-TB transmission expires.

10. The method of claim 8, further comprising:
starting the DRX inactivity timer after a last HARQ round-trip time (RTT) timer or a last UL HARQ RTT timer of HARQ processes corresponding to the UL or DL multi-TB transmission expires.

11. The method of claim 2 or 3, wherein determining whether to start the DRX inactivity timer based on the at least one of the first configuration or the second configuration of the HARQ comprises:
starting the DRX inactivity timer, wherein the first configuration indicates HARQ feedback disabled or indicates an HARQ mode B.

12. The method of claim 2 or 3, wherein determining whether to start the DRX inactivity timer based on the at least one of the first configuration or the second configuration of the HARQ comprises:
not starting the DRX inactivity timer, wherein the first configuration indicates an HARQ mode A.

13. The method of claim 2 or 3, wherein determining whether to start the DRX inactivity timer based on the at least one of the first configuration or the second configuration of the HARQ comprises:
in a case where the PDCCH indicates DL single-TB transmission, starting the DRX inactivity timer in a case where one of following occurs:
the first configuration indicating HARQ feedback enabled for an HARQ process of DL transmission;
an HARQ process being configured with HARQ feedback disabled via the second configuration; or
a terminal being a narrow band Internet of Things (NB-IoT) terminal and being only configured with one HARQ process.

14. The method of claim 2 or 3, further comprising:
for UL or DL multi-TB transmission, not starting the DRX inactivity timer, wherein the first configuration and the second configuration are not determined, and an HARQ round-trip time (RTT) timer or a UL HARQ RTT timer of HARQ processes corresponding to multiple TBs expires.

15. A method for starting a timer, comprising:
sending at least one of a first configuration or a second configuration of a hybrid automatic repeat request (HARQ) to a terminal, wherein a physical downlink control channel (PDCCH) indicates uplink (UL) or downlink (DL) transmission block (TB) transmission, and the at least one of the first configuration or the second configuration of the HARQ is used for determining whether to start a discontinuous reception (DRX) inactivity timer.

16. A terminal, comprising:
a processing module, configured to determine whether to start a discontinuous reception (DRX) inactivity timer based on at least one of a first configuration or a second configuration of a hybrid automatic repeat request (HARQ), wherein a physical downlink control channel (PDCCH) indicates uplink (UL) or downlink (DL) transmission block (TB) transmission.

17. A network device, comprising:
a transceiver module, configured to send at least one of a first configuration or a second configuration of a hybrid automatic repeat request (HARQ) to a terminal, wherein a physical downlink control channel (PDCCH) indicates uplink (UL) or downlink (DL) transmission block (TB) transmission, and the at least one of the first configuration or the second configuration of the HARQ is used for determining whether to start a discontinuous reception (DRX) inactivity timer.

18. A terminal, comprising:
one or more processors,
wherein the terminal is configured to implement the method for starting a timer of any one of claims 1 to 14.

19. A network device, comprising:
one or more processors,
wherein the network device is configured to implement the method for starting a timer of claim 15.

20. A communication system, comprising a terminal and a network device, wherein the terminal is configured to implement the method for starting a timer of any one of claims 1 to 14, and the network device is configured to implement the method for starting a timer of claim 15.

21. A storage medium, for storing instructions that, when running on a communication device, cause the communication device to implement the method for starting a timer of any one of claims 1 to 14 or the method for starting a timer of claim 15.
